(19) Europäisches Patentamt
European Patent Office
Office européen des brevets

(11) Veröffentlichungsnummer : **0 075 775**
**B1**

(12) # EUROPÄISCHE PATENTSCHRIFT

(45) Veröffentlichungstag der Patentschrift : **21.01.87**

(21) Anmeldenummer : **82108415.9**

(22) Anmeldetag : **13.09.82**

(51) Int. Cl.[4] : **C 08 L 75/00**, C 09 D 3/72 // (C08L75/00, C08G18:10, 18:32)

(54) **Verfahren zur Herstellung von hitzeaktivierbare Vernetzer enthaltenden wässrigen Dispersionen oder Lösungen von Polyurethan-Polyharnstoffen, die nach dem Verfahren erhältlichen Dispersionen oder Lösungen, sowie ihre Verwendung zur Herstellung von Überzügen.**

(30) Priorität : **23.09.81 DE 3137748**

(43) Veröffentlichungstag der Anmeldung : **06.04.83 Patentblatt 83/14**

(45) Bekanntmachung des Hinweises auf die Patenterteilung : **21.01.87 Patentblatt 87/04**

(84) Benannte Vertragsstaaten : **AT BE DE FR GB IT NL**

(56) Entgegenhaltungen :
**EP-B- 0 000 029**
**EP-B- 0 004 069**
**Houben-Weyl (1963), Bd. XIV/2, S. 61-63, 69, 77,-79**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Nachtkamp, Klaus, Dr.**
**Leuchterstrasse 112**
**D-5000 Köln 80 (DE)**
Erfinder : **Weider, Franz, Dr.**
**Jakob-Fröhlen-Strasse 36**
**D-5090 Leverkusen 3 (DE)**
Erfinder : **Noll, Klaus, Dr.**
**Morgengraben 6**
**D-5000 Köln 80 (DE)**
Erfinder : **Pedain, Josef, Dr.**
**haferkamp 6**
**D-5000 Köln 80 (DE)**
Erfinder : **Hoehne, Klaus, Dr.**
**Elisabeth-Langgaesser-Strasse 39**
**D-5090 Leverkusen 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 075 775 B1

**Beschreibung**

Die vorliegende Erfindung betrifft ein neues Verfahren zur Herstellung von hitzeaktivierbare Vernetzer enthaltenden wäßrigen Dispersionen oder Lösungen von vernetzbaren Polyurethan-Polyharnstoffen, die nach diesem Verfahren erhältlichen Dispersionen oder Lösungen, sowie ihre Verwendung zur Herstellung von Überzügen mit hoher Wasser- und Lösungsmittelresistenz insbesondere auf metallischen Substraten.

Verfahren zur Herstellung von wäßrigen Polyurethan-Polyharnstoff-Dispersionen sind bekannt. Wegen ihrer besonders guten Stabilität und der vergleichsweise hohen Wasserfestigkeit der daraus erhältlichen Beschichtungen sind insbesondere solche Dispersionen von Bedeutung, die nach dem Prinzip des Einbaus hydrophiler Zentren (sog. innerer Emulgatoren) in die makromolekulare Kette des Polymeren hergestellt werden (z. B. DE-PS 1 184 946, DE-PS 1 178 586, DE-AS 1 237 306, DE-OSen 1 495 745, 1 595 602, 1 770 068, 2 019 324, vgl. auch D. Dieterich et al, Angew. Chem. *82*, 53 (1970)).

Während man bei wichtigen Herstellungsverfahren für wäßrige Polyurethanharnstoff-Dispersionen auf die Mitverwendung organischer Lösungsmittel angewiesen ist, mit dem Nachteil, daß diese Lösungsmittel durch aufwendige Destillation aus den Dispersionen entfernt und anschließend rektifiziert werden müssen, sind Verfahren bekannt geworden, die die lösungsmittelfreie bzw. lösungsmittelarme Herstellung von Polyurethanharnstoffen in wäßriger Phase erlauben.

In der DE-OS 2 725 589 (entspricht der EP-B-0000029), der DE-OS 2 811 148 (entspricht der EP-B-0004069) oder der DE-OS 2 732 131 bzw. US-PS 4 192 937 werden besonders elegante Verfahren zur lösungsmittelfreien Herstellung von wäßrigen Dispersionen oder Lösungen von Polyurethan-Polyharnstoffen beschrieben, bei welchen hydrophil modifizierte, d. h. eingebaute ionische Zentren und/oder externe Emulgatoren enthaltende, endständige Isocyanatgruppen aufweisende Präpolymere mit Kettenverlängerungsmitteln in blockierter Form, die unter dem hydrolytischen Einfluß von Wasser Polyamine oder Hydrazine bilden, vermischt werden. Durch anschließendes Vermischen der so erhaltenen Gemische mit Wasser entstehen dann unter gleichzeitiger und/oder anschließender Kettenverlängerungsreaktion der Isocyanatgruppen mit dem hydrolytisch gebildeten Polyamin oder Hydrazin stabile wäßrige Dispersionen oder Lösungen von Polyurethan-Polyharnstoffen.

Diese Verfahren führen zu Polyurethanharnstoffen, die hinsichtlich ihrer mechanischen Festigkeit und ihrer Hydrolysebeständigkeit den nach den konventionellen « Lösungsmittelverfahren » hergestellten Produkten ebenbürtig sind und letzere sogar in einigen anwendungstechnischen Eigenschaften übertreffen. Die so erhaltenen Dispersionen entsprechen daher den für eine Vielzahl von Anwendungen gestellten Qualitätsanforderungen, so z. B. in der Textilbeschichtung, wo die hohe Flexibilität der weitgehend linear aufgebauten Polyurethanharnstoffe von Vorteil ist.

Bestimmte Anwendungen auf nicht-flexiblen Substraten, wie z. B. auf Metallen, erfordern jedoch Beschichtungen aus hochverzweigten Polymeren. Dies ist vielfach der Fall bei Lacken, die eine sehr hohe Festigkeit gegen Lösungsmittel und andere chemische Agentien sowie eine hohe Temperaturbeständigkeit aufweisen sollen.

Auch für diese Anwendungsgebiete werden bereits in gewissem Umfang Polymere aus wäßriger Phase eingesetzt. Dabei handelt es sich meist um Einbrennlacke auf der Basis von Kombinationen aus Polyester- oder Polyacrylat-Dispersionen und z. B. Melamin/Formaldehyd-Harzen. Es wäre jedoch wünschenswert, auch auf dem Gebiet der wäßrigen Einbrennlacke, Systeme mit den typischen Vorteilen, die Polyurethanlacken aus organischer Lösung, wie hohe Elastizität und Abriebfestigkeit, hervorragende Beständigkeit gegen Witterungseinflüsse sowie sehr gute Wasser- und Lösungsmittelfestigkeit innewohnen, zur Verfügung zu haben.

Es war daher die der vorliegenden Erfindung zugrundeliegende Aufgabe, ein lösungsmittelfreies bzw. lösungsmittelarmes Verfahren zur Verfügung zu stellen, das die Herstellung von hitzeaktivierbare Vernetzer enthaltenden, lagerstabilen wäßrigen Dispersionen oder Lösungen von vernetzbaren Polyurethan-Polyharnstoffen gestattet, welche zur Herstellung von Überzügen und Beschichtungen mit verbesserten mechanischen Eigenschaften und erhöhter Wasser- und Hydrolyseresistenz geeignet sind.

Diese Aufgabe konnte durch die Bereitstellung des nachstehend näher beschriebenen erfindungsgemäßen Verfahrens gelöst werden, welches auf der überraschenden Beobachtung beruht, daß man bei den an sich bekannten Verfahren des Standes der Technik zur Herstellung von wäßrigen Dispersionen oder Lösungen von Polyurethan-Polyharnstoffen durch Vermischen eines Gemischs aus hydrophil modifizierten NCO-Präpolymeren und blockierten Polyaminen oder blockierten Hydrazinen mit Wasser dem mit Wasser zu vermischenden Gemisch hydrophobe Polyisocyanate mit blockierten Isocyanatgruppen einverleiben kann, ohne daß dies zu Ausfällungen der genannten hydrophoben Komponente führt. Derartige hydrophobe Polyisocyanate mit blockierten Isocyanatgruppen sind seit langen Jahren bekannt (vgl. z. B. « Methoden der organischen Chemie » von Houben-Weyl, Band XIV/2, Teil 2 (1963), Seiten 57-79) und werden beispielsweise in Kombination mit aktive Wasserstoffatome, insbesondere Hydroxylgruppen aufweisenden Verbindungen bei der Herstellung von lösungsmittelhaltigen Einbrennlacken verwendet. Es war ebenfalls bereits bekannt, derartige blockierte Polyisocyanate als Modifizierungsmittel vorab hergestellten wäßrigen Polyurethandispersionen zuzusetzen (vgl. z. B. die bereits oben zitierten EP-B-0000029 bzw. 0004069 oder DE-AS 2 624 442). Aus der letztgenannten Vorveröffentlichung

war jedoch auch bekannt, daß zur Einverleibung von hydrophoben Vernetzungsmitteln, insbesondere von blockierten Polyisocyanaten, in vorab hergestellte wäßrige Polyurethandispersionen die Mitverwendung von hydrophilen Lösungsmitteln als Löslichkeitsvermittler oder der Einsatz der hydrophoben Zusatzmittel in emulgierter Form erforderlich ist. Andererseits ist die erfindungsgemäß aufgefundene Möglichkeit, hydrophobe Vernetzungsmittel ohne gleichzeitige Verwendung von hydrophilen Lösungsmitteln bzw. ohne Verwendung von zusätzlichen Emulgatoren in die Dispersionen bzw. Lösungen einzuarbeiten von erheblichem technischem Interesse, da der Verzicht auf die genannten hydrophilen Hilfsmittel selbstverständlich zur Erhöhung der Wasser- und Hydrolyseresistenz der aus den Dispersionen bzw. Lösungen letztlich erhaltenen Flächengebilde beiträgt. Aus dem gleichen Grund sind die nachstehend näher beschriebenen erfindungsgemäßen Verfahrensprodukte den bekannten wäßrigen Polymerdispersionen überlegen, die als Vernetzer wasserlösliche oder -dispergierbare blockierte Polyisocyanate enthalten (vgl. z. B. DE-OS 2 456 469, DE-OS 2 708 611, EP-OS 12 348 oder EP-OS 22 452).

Im übrigen konnte die überraschende Feststellung gemacht werden, daß nach dem erfindungsgemäßen Verfahren hergestellte, blockierte Polyisocyanate enthaltende wäßrige Polyurethandispersionen eine deutlich erhöhte Viskosität und Lagerstabilität aufweisen als analoge Dispersionen, denen das blockierte Polyisocyanat nachträglich in Form einer Lösung in einem hydrophilen Lösungsmittel einverleibt worden ist.

Die beim nachstehend näher beschriebenen erfindungsgemäßen Verfahren erhaltenen wäßrigen Dispersionen oder Lösungen weisen im übrigen weitere, nicht vorhersehbare, technisch vorteilhafte Eigenschaften auf. So eignen sie sich insbesondere zur Herstellung von Einbrennlacken, die ein hervorragendes mechanisches Eigenschaftsniveau mit einer überraschend guten Korrosionsschutzwirkung auf metallischen Substraten verbinden, selbst auf solchen, die nicht einer Vorbehandlung (z. B. Phosphatierung) unterzogen wurden. Korrosionsschutzüberzüge für nicht vorbehandelte metallische Untergründe sind aber von erheblichem technischem Interesse. Nicht vorauszusehen war auch, daß diese Einbrennlacke ihre guten Eigenschaften bereits nach Aushärtung bei vergleichsweise niedrigen Temperaturen aufweisen, und daß die beim erfindungsgemäßen Verfahren erhaltenen Dispersionen oder Lösungen eine ausgezeichnete Sedimentationsstabilität aufweisen und zwar selbst bei erhöhten Temperaturen, wie sie bei Transport oder Lagerung leicht auftreten können. Es ist auch besonders hervorzuheben, daß es zur Gewährleistung der genannten Eigenschaften der aus den Dispersionen bzw. Lösungen erhaltenen Flächengebilde nicht erforderlich ist, in das Polyurethan-Polyharnstoff-Basismolekül spezielle NCO-reaktive Gruppierungen wie z. B. Hydroxyl- oder Carboxylgruppen einzubauen, obwohl solche Gruppen selbstverständlich zugegen sein können.

Gegenstand der Erfindung ist somit ein Verfahren zur Herstellung von hitzeaktivierbare Vernetzer enthaltenden, lagerstabilen wäßrigen Dispersionen oder Lösungen von vernetzbaren Polyurethan-Polyharnstoffen auf Basis von

a) eine, die Dispergierbarkeit bzw. Löslichkeit der Systeme in Wasser gewährleistende, Menge an chemisch eingebauten hydrophilen Gruppierungen und/oder externen, nicht chemisch gebundene Emulgatoren enthaltenden (im statistischen Mittel) mindestens 1,8 freie, endständige Isocyanatgruppen aufweisenden Präpolymeren,

b) in Wasser weder löslichen noch dispergierbaren, hydrophoben Polyisocyanaten mit blockierten Isocyanatgruppen und

c) Verbindungen, welche höchstens eine freie aminische oder hydrazinische primäre oder sekundäre Aminogruppe und mindestens eine blokkierte, unter dem Einfluß von Wasser eine freie, aminische oder hydrazinische primäre oder sekundäre Aminogruppe bildende Gruppe und insgesamt mindestens 2 zumindest teilweise blockierte aminische oder hydrazinische primäre und/oder sekundäre Aminogruppen aufweisen,

unter Herstellung von Gemischen aus a) und c) unter Einhaltung eines solchen Mengenverhältnisses der Komponenten, daß auf jede freie Isocyanatgruppen der Komponente a) 0,25 bis 2 blockierte bzw. nichtblockierte primäre oder sekundäre, hydrazinische oder aminische Aminogruppen vorliegen in einem Temperaturbereich von — 20 bis + 100 °C und anschließendes Vermischen des Gemischs mit Wasser, dadurch gekennzeichnet, daß man bei der Herstellung der Gemische aus a) und c) die Komponente b) in einer solchen Menge mitverwendet, daß in dem mit Wasser zu vermischenden Gemisch pro Gewichtsteil der Komponente a) 0,02 bis 3 Gew.-Teile der Komponente b) in Form eines physikalischen Gemischs vorliegen.

Gegenstand der Erfindung sind auch die nach dem erfindungsgemäßen Verfahren erhaltenen Dispersionen oder Lösungen.

Gegenstand der Erfindung ist schließlich auf die Verwendung der nach dem erfindungsgemäßen Verfahren erhaltenen Dispersionen oder Lösungen zur Herstellung von Überzügen durch Beschichtung hitzeresistenter Substrate und Entfernen des Wassers durch Verdunsten oder Verdampfen unter gleichzeitiger oder anschließender thermischer Vernetzung der Beschichtungen.

Ausgangsmaterialien für das erfindungsgemäße Verfahren sind a) hydrophil modifizierte, endständige Isocyanatgruppen aufweisende NCO-Präpolymere, b) hydrophobe Polyisocyanate mit blockierten Isocyanatgruppen und c) Hydrazin oder organische Polyamine mit zumindest teilweise blockierten

hydrazinischen oder aminischen Aminogruppen.

Bei der Komponente a) handelt es sich um an sich bekannte, eingebaute ionische und/oder nichtionisch-hydrophile Zentren aufweisende und/oder in Kombination mit externen Emulgatoren vorliegende NCO-Präpolymere die (im statistischen Mittel) mindestens 1,8, vorzugsweise mindestens 2 endständige Isocyanatgruppen aufweisen. Die Herstellung derartiger hydrophil modifizierter NCO-Präpolymerer ist beispielsweise in US-PS 4 269 748, Kolonne 3, Zeile 45 bis Kolonne 7, Zeile 64 beschrieben. Die in dieser Vorveröffentlichung beschriebenen, hydrophil modifizierten NCO-Präpolymeren können auch beim erfindungsgemäßen Verfahren als Komponente a) eingesetzt werden.

Diese nach an sich bekannten Verfahren des Standes der Technik hergestellten, für das erfindungsgemäße Verfahren geeigneten NCO-Präpolymeren weisen vorzugsweise

i) eine mittlere NCO-Funktionalität von 1,8 bis 2,8, vorzugsweise 2 bis 2,5,

ii) einen Gehalt an kationischen oder anionischen eingebauten Gruppen von 0 bis 120, insbesondere von 0,1 bis 120 und besonders bevorzugt von 5 bis 70 Milliäquivalenten pro 100 g Feststoff,

iii) einen Gehalt an seitenständig, endständig und/oder innerhalb der Hauptkette eingebauten, innerhalb von Polyethersegmenten vorliegenden Ethylenoxideinheiten von 0 bis 30 und insbesondere von 0 bis 10 Gew.-%, bezogen auf das Gesamtgewicht des Präpolymeren und

iv) ein mittleres, aus der Stöchiometrie der Ausgangsmaterialien errechenbares Molekulargewicht von 500 bis 10 000, insbesondere 800 bis 4 000,

auf.

Zu den bevorzugten NCO-Präpolymeren gehören solche, welche entweder ionische Gruppen, d. h. insbesondere Carboxylat-, Sulfonat- oder Ammoniumgruppen, oder nicht-ionische Gruppen der o. g. Art oder sowohl ionische als auch nicht-ionische Gruppen der genannten Art in einer solchen Menge innerhalb der genannten Bereiche aufweisen, die die Dispergierbarkeit bzw. Löslichkeit der erfindungsgemäßen Systeme in Wasser gewährleistet. Besonders bevorzugt werden entsprechende, Carboxylatgruppen und gegebenenfalls freie Carboxylgruppen aufweisende NCO-Präpolymere verwendet, die durch (teilweise) Neutralisation von Carboxylgruppen mit tertiären Aminen, vorzugsweise mit aliphatisch gebundenen tertiären Aminogruppen vor der Herstellung der Prepolymeren (z. B. Verwendung von (teil) neutralisierten Dihydroxycarbonsäuren wie Dimethylolpropionsäure als Aufbaukomponente) oder im Anschluß an die Herstellung der Prepolymeren (z. B. unter Verwendung von freier Dimethylolpropionsäure), erhalten worden sind. Ebenso wie in der zitierten US-PS 4 269 748 dargelegt, ist es jedoch auch beim erfindungsgemäßen Verfahren möglich, NCO-Präpolymere einzusetzen, die keine der unter ii) und iii) genannten hydrophilen Gruppen aufweisen. Im Falle der Verwendung derartiger NCO-Präpolymerer ist bei der Durchführung des erfindungsgemäßen Verfahrens die Mitverwendung von externen Emulgatoren, wie in der zitierten US-PS 4 269 748 angegeben, unerläßlich. Den gemachten Definitionen entsprechende Gemische von NCO-Präpolymeren können ebenfalls eingesetzt werden.

Bei der beim erfindungsgemäßen Verfahren einzusetzenden Komponente b) handelt es sich um an sich bekannte, hydrophobe Polyisocyanate mit blockierten Isocyanatgruppen. Bei diesen in blockierter Form vorliegenden Polyisocyanaten handelt es sich beispielsweise um Diisocyanate, wie sie auch zur Herstellung der NCO-Präpolymeren a) geeignet sind, und wie sie beispielhaft in US-PS 4 269 748, Kolonne 4, Zeilen 10-32 offenbart sind. Vorzugsweise handelt es sich bei der erfindungsgemäß einzusetzenden Komponente b) um Polyisocyanate mit einer über 2 liegenden NCO-Funktionalität, gegebenenfalls im Gemisch mit den erwähnten Diisocyanaten. Beispiele für derartige höherfunktionelle Polyisocyanate sind Tris-(6-isocyanatohexyl)-biuret, gegebenenfalls im Gemisch mit seinen höheren Homologen, Tris-(6-isocyanatohexyl)-isocyanurat, gegebenenfalls im Gemisch mit seinen höheren Homologen, wie es beispielsweise gemäß DE-OS 2 839 133 durch Trimerisierung von Hexamethylendiisocyanat zugänglich ist, sowie weitere durch Trimerisierung von aliphatischen und/oder aromatischen Diisocyanaten wie z. B. Isophorondiisocyanat, Diisocyanato-toluol oder Gemischen aus Diisocyanato-toluol und Hexamethylendiisocyanat erhältliche, Isocyanuratgruppen aufweisende Polyisocyanate, wie sie zum bekannten Stand der Technik gehören. Sehr gut in blockierter Form als Komponente b) einsetzbare Polyisocyanate sind auch die an sich bekannten Urethangruppen aufweisenden Polyisocyanate, wie sie beispielsweise durch Umsetzung von überschüssigen Mengen an 2,4-Diisocyanato-toluol oder an Isophorondiisocyanat mit einfachen mehrwertigen Alkoholen des Molekulargewichtsbereichs 62-300, insbesondere mit Trimethylolpropan und anschließende destillative Entfernung des nicht-umgesetzten Diisocyanatüberschusses oder wie sie in bereits blockierter Form gemäß der nachstehenden Herstellungsvorschrift für « blockiertes Polyisocyanat III » erhalten werden können.

Die beispielhaft genannten Polyisocyanate werden erfindungsgemäß in blockierter Form eingesetzt. Geeignete Blockierungsmittel sind die üblicherweise zur Blockierung von Polyisocyanaten eingesetzten Verbindungen wie z. B. Phenol, Kresol, Oxime, Lactame wie ε-Caprolactam oder C-H-acide Verbindungen wie Malonsäurediethylester, Acetessigsäureethylester oder Acetylaceton. Es ist auch möglich, die beispielhaft genannten Polyisocyanate in teilweise dimerisierter und teilweise blockierter Form einzusetzen, da auch dimerisierte Isocyanatgruppen (Uretdiongruppen) blockierte Isocyanatgruppen darstellen. Auch beliebige Gemische blockierter Polyisocyanate der beispielhaft genannten Art können eingesetzt werden.

Besonders bevorzugt werden beim erfindungsgemäßen Verfahren als Komponente b) Polyisocyanate der beispielhaft genannten Art in mit Oximen blockierter Form eingesetzt. Hierzu als Blockierungsmittel geeignete Oxime sind beispielsweise Acetonoxim, Methylethylketonoxim (Butanonoxim), Methyl-isobutylketonoxim, Cyclohexanonoxim, Cyclopentanonoxim, Acetophenonoxim, Benzophenonoxim, Formaldoxim oder Acetaldoxim. Besonders bevorzugt wird Methylethylketonoxim als Blockierungsmittel verwendet. Vorzugsweise handelt es sich bei der erfindungsgemäß einzusetzenden Komponente b) um vollständig blockierte Polyisocyanate, d. h. um Verbindungen, die keine freien Isocyanatgruppen mehr aufweisen. Derartige Verbindungen liegen bei der Durchführung des erfindungsgemäßen Verfahrens in Form eines physikalischen Gemischs mit den Komponenten a) und c) vor. Die blockierten Polyisocyanate sind im übrigen hydrophob, d. h. bei ihrer Herstellung werden keine Aufbaukomponenten oder Hilfsmittel mit hydrophilen Eigenschaften mitverwendet. Die Herstellung der blockierten Polyisocyanate durch Umsetzung der nicht-blockierten Polyisocyanate mit den Blockierungsmitteln erfolgt nach den üblichen Methoden des Standes der Technik, gegebenenfalls unter Mitverwendung der nachstehend beispielhaft genannten Lösungsmittel.

Bei der Komponente c) handelt es sich um beliebige organische Verbindungen, die höchstens eine freie aminische oder hydrazinische, primäre oder sekundäre Aminogruppe und mindestens eine blockierte, unter dem Einfluß von Wasser eine freie aminische oder hydrazinische primäre oder sekundäre Aminogruppe bildende Gruppe und insgesamt mindestens zwei zumindest teilweise blockierte aminische oder hydrazinische primäre oder sekundäre Aminogruppen aufweisen. Besonders bevorzugt handelt es sich um, dieser Definition entsprechende, Kondensationsprodukte von Hydrazin oder von aliphatischen bzw. cycloaliphatischen primären oder sekundären Polyaminen mit Ketonen oder Aldehyden, d. h. um Azine, Hydrazone, Ketimine, Aldimine und/oder Enamine.

Erfindungsgemäß als Komponente c) geeignete Azine oder Hydrazone sind beispielsweise die in US-PS 4 269 748, Kolonne 7, Zeile 65, Kolonne 8, Zeile 68 beschriebenen Verbindungen. Vorzugsweise handelt es sich um Verbindungen der Formeln

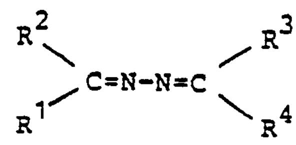

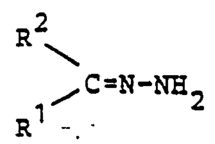

in welchen

$R^1$, $R^2$, $R^3$ und $R^4$ für gleiche oder verschiedene Reste stehen und Wasserstoff, aliphatische Kohlenwasserstoffreste mit einem bis 17, vorzugsweise 1 bis 5 Kohlenstoffatomen bedeuten, wobei die Reste $R^1$ und $R^2$ bzw. $R^3$ und $R^4$ jeweils zusammen mit dem Kohlenstoffatom des Grundgerüstes auch einen cycloaliphatischen Ring mit 5 bis 18, vorzugsweise 5 bis 6, Kohlenstoffatome bilden können.

Vorzugsweise werden solche Verbindungen der genannten Formeln eingesetzt, für welche die Reste $R^1$ bis $R^4$ für Kohlenwasserstoffreste der beispielhaft genannten Art stehen.

Bei den ebenfalls sehr gut als Ausgangskomponente c) einsetzbaren Ketiminen, Aldiminen oder Enaminen handelt es sich um obiger Definition entsprechenden Verbindungen, wie sie beispielsweise in der DE-OS 2 725 589 (entsprechend US-Patentanmeldung 908 885 vom 24.5.1978) auf Seite 15, Zeile 5 bis Seite 18, Zeile 24 beispielhaft offenbart sind, bzw. die aus den dort beispielhaft genannten Ausgangsmaterialien nach den bekannten Methoden des Standes der Technik erhältlich sind.

Anstelle der Azin-, Hydrazon-, Ketimin-, Aldimin- bzw. Enamingruppen aufweisenden Verbindungen oder auch in Abmischung mit diesen können auch die in US-PS 4 192 937 offenbarten oder auch beliebige andere Bisoxazolidine als erfindungsgemäß einzusetzende Komponente c) verwendet werden.

Erfindungsgemäß bevorzugt als Komponente c) einzusetzen sind

c1) mit Ketonen blockierte bzw. teilblockierte, aliphatische bzw. cycloaliphatische, diprimäre Diamine, die in nicht-blockierter Form ein Molekulargewicht von 60-500, vorzugsweise 100-250 aufweisen, und die (im statistischen Mittel) pro Molekül höchstens 0,15 freie Aminogruppen und mindestens 1,85 Ketimingruppen aufweisen oder

c2) Azine bzw. Hydrazone auf Basis von Hydrazin und Ketonen, der beispielhaft genannten Art.

Besonders bevorzugt werden die zuletzt genannten Azine (Ketazine) bzw. Hydrazone eingesetzt. Auch beliebige Gemische der beispielhaft genannten (teil) blockierten Polyamine können erfindungsgemäß eingesetzt werden.

Zur Durchführung des erfindungsgemäßen Verfahrens werden Gemische aus den Komponenten a), b) und c) hergestellt. Hierbei werden die Mengenverhältnisse der genannten Komponenten so gewählt, daß pro Gewichtsteil des NCO-Präpolymeren (incl. des gegebenenfalls mitzuverwendenden externen Emulgators) 0,02 bis 3, vorzugsweise 0,05 bis 2 Gew.-Teile des blockierten Polyisocyanats und für jede freie Isocyanatgruppe des NCO-Präpolymeren 0,25 bis 2, vorzugsweise 0,5 bis 1,2 blockierte bzw. nichtblockierte primäre oder sekundäre, hydrazinische oder aminische Aminogruppen vorliegen. Die Abmischung der drei Komponenten erfolgt in einem Temperaturbereich von — 20 bis + 100 °C, vorzugsweise 15 bis 70 °C. Falls die Einzelkomponenten oder das aus ihnen entstehende Gemisch hochschmelzend oder hochviskos ist, so daß eine Durchmischung im bevorzugten Temperaturbereich erschwert wird, ist es selbstverständlich möglich, die Einzelkomponenten oder auch das Gemisch der Einzelkomponenten oder auch das Gemisch der Einzelkomponenten mit organischen Lösungsmitteln zu verdünnen, um so ihre Viskosität zu erniedrigen.

Es ist jedoch ein Vorteil des erfindungsgemäßen Verfahrens, daß auch in solchen Fällen sehr viel weniger Lösungsmittel mitverwendet werden muß, als — wie bei früheren bekannten Verfahren — zur homogenen Auflösung des hochmolekularen, kettenverlängerten Polyurethanharnstoffs erforderlich wäre. Die Mitverwendung von Lösungsmitteln kann auch gerechtfertigt sein, wenn z. B. bei der späteren Anwendung der Dispersionen zu Beschichtungszwecken Filmbildungs- oder Verlaufshilfsmittel erforderlich sind. Die als derartige Hilfsmittel geeigneten Lösungsmittel werden oft zweckmäßigerweise schon vor der Dispersionsherstellung dem zu dispergierenden Gemisch zugegeben.

Es handelt sich bei diesen Lösungsmitteln um die gleichen Lösungsmittel, die gegebenenfalls auch bei der Herstellung der Komponenten a) und/oder b) und/oder c) mitverwendet werden können, wie z. B. Aceton, Methylethylketon, N-Methyl-2-pyrrolidon, Dimethylformamid, Ethylencarbonat, Essigsäureethylester, Ethylenglykolacetat, Toluol oder Xylol. Die Gesamtmenge an mitverwendetem Lösungsmittel (unter Einbeziehung des gegebenenfalls bereits bei der Herstellung der Einzelkomponenten a), b) und c) verwendeten Lösungsmittels) kann einen Anteil von bis zu 40 Gew.-%, bezogen auf das Gesamtgewicht der Komponenten a), b) und c) erreichen ; im allgemeinen genügen jedoch, wenn überhaupt Lösungsmittel erforderlich sind, wesentlich geringere Mengen. Entfallen Gründe der obengenannten Art, die eine Mitverwendung von organischen Lösungsmitteln erforderlich machen, wie z. B. hohe Viskositäten, Bedarf an Filmbildungshilfsmitteln), so ist das erfindungsgemäße Verfahren auch völlig lösungsmittelfrei durchführbar. Die Einverleibung der hydrophoben blockierten Polyisocyanate bedarf, wie eingangs dargelegt, keines Zusatzes von Lösungsmitteln oder Dispergierhilfsmitteln.

Im Falle der Verwendung von Hydrazonen oder teilblockierten Polyaminen als Komponente c) kann bei der Herstellung des Gemischs eine exotherme Reaktion zwischen freien Aminogruppen und den freien Isocyanatgruppen eintreten, was jedoch bei Beachtung der genannten Bedingungen bezüglich des Gehalts der Komponente c) an freien Aminogruppen keinesfalls zu unvertretbar hohen Viskositätssteigerungen führt.

Es ist dennoch oft zweckmaßig, die Herstellung des Gemischs aus a), b) und c) erst kurz vor der nachfolgenden Durchmischung dieses Gemischs mit Wasser durchzuführen.

Der nachfolgende Schritt des erfindungsgemäßen Verfahrens besteht in dem Vermischen des Gemisches mit Wasser zur Herstellung der wäßrigen Lösung bzw. Dispersion unter gleichzeitiger Hydrolyse der blockierten aminischen bzw. hydrazinischen Kettenverlängerer.

Man benutzt für diesen Schritt so viel Wasser, daß die Dispersion einen möglichst hohen Festkörperanteil aufweist. Im allgemeinen lassen sich Dispersionen mit 40 bis 70 % Festkörper sehr gut herstellen. Weiteres Verdünnen mit Wasser ist ohne weiteres möglich. Das Wasser wird vorzugsweise in einem Guß oder je nach Belieben nach und nach zugegeben. Die Vermischung des Gemisches aus den Komponenten a), b) und c) mit Wasser kann aber auch so erfolgen, daß das Gemisch in die wäßrige Phase eingetragen wird oder daß nach einem kontinuierlichen Verfahren in geeigneten Mischaggregaten zunächst die Komponenten a), b) und c) und dann Wasser miteinander vermischt werden. Man benutzt Wasser von 0 bis 90 °C, vorzugsweise von 20 bis 60 °C.

Anschließend können die Dispersionen bzw. Lösungen gegebenenfalls noch weiter in bekannter Weise modifiziert werden. Man kann z. B. noch ein weiteres in Wasser lösliches Polyamin bzw. Hydrazin zufügen, falls das Äquivalentverhältnis von NCO- zu (blockierten) $NH_2$- bzw. NH-Gruppen so gewählt wurde, daß noch freie NCO-Gruppen vorhanden sind.

Es ist sinnvoll, die Dispersionen bzw. Lösungen nach ihrer Herstellung einige Zeit nachzurühren, um die zwischen den einzelnen Komponenten und Wasser ablaufenden Reaktionen zu komplettieren. Dies kann bei Temperaturen zwischen 20 und 100 °C, vorzugsweise bei 40 bis 80 °C, geschehen.

Die Frage, ob beim erfindungsgemäßen Verfahren Lösungen oder Dispersionen der Polyurethane in Wasser erhalten werden, ist vor allem vom Molekulargewicht und der Hydrophilie der gelösten bzw. dispergierten Teilchen abhängig, welche ihrerseits durch geeignete Wahl von Art und Mengenverhältnis der Ausgangsmaterialien, insbesondere bei der Herstellung der NCO-Präpolymeren nach den bekannten Prinzipien der Polyurethanchemie eingestellt werden können.

Durch die dispergierende bzw. solubilisierende Wirkung des sich aus den Komponenten a) und c) bildenden, hydrophil modifizierten Polyurethan-Polyharnstoffs entstehen beim erfindungsgemäßen Verfahren auch unter Mitverwendung der hydrophoben Komponente b) stabile Dispersionen oder Lösungen, wobei im Rahmen der Erfindung unter « Lösungen » kolloiddisperse Systeme zu verstehen

sind. Im allgemeinen entstehen jedoch beim erfindungsgemäßen Verfahren echte Dispersionen, wobei die dispergierten Teilchen im allgemeinen einen mittleren Teilchendurchmesser von ca. 20-200 nm aufweisen.

Die beim erfindungsgemäßen Verfahren erhaltenen, Vernetzer enthaltenden Polyurethan-Polyharnstoff-Dispersionen bzw. -Lösungen sind auch bei erhöhten Temperaturen ohne Koagulation oder Sedimentation lagerstabil. Sie eignen sich in ausgezeichneter Weise zur Herstellung von Überzügen auf einer Vielzahl von Substraten wie z. B. von Textilien, Leder, flexiblen Kunststoffen, Glasfasern, Metallen, Holz oder harten Kunststoffen. Besonders gut eignen sich die Dispersionen bzw. Lösungen jedoch als Einbrennlacke für hitzeresistente Substrate, insbesondere für Metalle. Eine herausragende Eigenschaft der erfindungsgemäßen Einbrennlacke ist der gute Korrosionsschutz, der selbst auf solchen metallischen Unterlagen erzielt werden kann, die keiner Vorbehandlung, beispielsweise durch Phosphatierung, unterworfen wurden. Zur Herstellung der Überzüge werden die Substrate mit den erfindungsgemäßen Dispersionen oder Lösungen, die gegebenenfalls auch mit den in der Lacktechnologie üblichen Hilfsstoffen, wie z. B. Pigmenten, Füllstoffen oder Verlaufshilfsmitteln vermischt sein können, nach den üblichen Methoden, beispielsweise durch Spritzen, Streichen oder Tauchen, beschichtet. Die thermische Aushärtung erfolgt im allgemeinen im Temperaturbereich von 80 bis 250 °C, vorzugsweise 100 bis 180 °C, wobei die Entfernung des Wassers aus dem Lackfilm durch Verdunsten oder Verdampfen vor oder während dieser Hitzebehandlung stattfindet.

Selbstverständlich können die erfindungsgemäßen Dispersionen oder Lösungen auch mit anderen Kunststoff-Dispersionen oder -Lösungen, beispielsweise mit anderen Polyurethandispersionen, oder mit Polyacrylat- oder Alkydharzdispersionen, abgemischt werden. Die so erhaltenen Gemische können ebenfalls für die genannten Anwendungsgebiete verwendet werden.

Die nachstehenden Beispiele dienen zur weiteren Erläuterung der Erfindung. Alle Prozentangaben beziehen sich, soweit nicht anders vermerkt, auf Gewichtsprozente.

Blockiertes Polyisocyanat I

Zu 1 000 g einer 90 %igen Lösung eines durch Trimerisierung von Hexamethylendiisocyanat erhaltenen Isocyanurat-Polyisocyanats (NCO-Gehalt : 20,5 %, Lösungsmittel : Ethylglykolacetat) gibt man unter Kühlung 425 g Butanonoxim, verdünnt mit 345 g Ethylglykolacetat und läßt bei 60 °C reagieren, bis im IR-Spektrum keine NCO-Bande (2 250 $cm^{-1}$) mehr nachweisbar ist. Das erhaltene blockierte Polyisocyanat liegt in Form einer 75 %igen Lösung vor.

Blockiertes Polyisocyanat II

Wie oben beschrieben wird aus 1 000 g eines Biuretgruppen aufweisenden Polyisocyanats auf Basis von Hexamethylendiisocyanat (NCO-Gehalt : 22,6 %) und 468 g Methylethylketonoxim, sowie 490 g Ethylglykolacetat ein isocyanatgruppenfreies blockiertes Polyisocyanat erhalten, das in Form einer 75 %igen Lösung vorliegt.

Blockiertes Polyisocyanat III

Zu 783 g Diisocyanatotoluol (Gemisch aus 80 % 2,4- und 20 % 2,6-Isomeren) gibt unter Kühlung 612 g Methylethylketonoxim. Danach wird auf 100 °C geheizt und portionsweise 96,3 g Trimethylolpropan zugegeben. Man rührt ca. 3 Stunden bei 100-110 °C, bis im IR-Spektrum keine NCO-Bande mehr nachweisbar ist.

Die erhaltene Schmelze wird auf ein Blech ausgegossen und erstarrt beim Abkühlen glasartig. Durch Mörsern erhält man ein Urethangruppen aufweisendes, blockiertes Polyisocyanat in Form eines kristallinen Pulvers.

Blockiertes Polyisocyanat IV

Zu einer Lösung von 3 g Natriumphenolat in 285 g Malonsäurediethylester gibt man 300 g des bei der Herstellung des blockierten Polyisocyanats II genannten, Biuretgruppen aufweisenden Polyisocyanats. Nach Abklingen der exothermen Reaktion wird bei 70 °C gerührt, bis im IR-Spektrum keine NCO-Bande mehr nachweisbar ist. Das warme Produkt wird mit 160 g Ethylglykolacetat verdünnt. Man erhält eine 75 %ige Lösung des blockierten Polyisocyanats IV.

Beispiel 1

Ansatz :

315 g Adipinsäure-Hexandiol-Polyester (Molekulargewicht : 840)
20,1 g Trimethylolpropan
53,6 g Dimethylolpropionsäure

30,3 g Triethylamin
180 g N-Methylpyrrolidon
471,6 g 4,4'-Diisocyanatodicyclohexylmethan
146 g blockiertes Polyisocyanat I
61,6 g Acetonazin
1 190 g entionisiertes Wasser

Aus dem bei 100 °C im Vakuum entwässerten Polyester, dem Trimethylolpropan, der Dimethylolpropionsäure, dem Triethylamin und dem N-Methylpyrrolidon stellt man bei 60 °C ein homogenes, klares Gemisch her. Dann gibt man das 4,4'-Diisocyanatodicyclohexylmethan zu, läßt die Temperatur auf 85 °C steigen und rührt 2 bis 3 Stunden, bis ein (korrigierter) NCO-Wert von 6,3 % erreicht ist. [1)]

Man kühlt auf 60 °C ab und gibt zu dem erhaltenen NCO-Prepolymer nacheinander das blockierte Polyisocyanat und das Acetonazin zu, wobei die Temperatur leicht abfällt und die Viskosität des Gemisches weiter abnimmt. Unter gutem Rühren läßt man jetzt das Wasser zulaufen, worauf sich eine feinteilige Dispersion bildet. Man erwärmt die Dispersion unter gutem Rühren auf 60 °C, rührt 3 Stunden nach und kühlt dann auf Raumtemperatur ab.

Die so erhaltene Dispersion zeigt im durchscheinenden Licht einen starken Tyndall-Effekt. Sie hat einen Feststoffgehalt von 40 % und eine Fordbecherviskosität (4 mm-Düse) von 13 Sekunden.

Die Dispersion ist bei Raumtemperatur lagerstabil. Bei 50 °C kann sie ohne wesentliche Veränderung der Viskosität und der Teilchengröße länger als 1 Monat gelagert werden.

Beim Trocknen entstehen klare, hochglänzende Filme. Die Mindestfilmbildungstemperatur liegt, bedingt durch die bei der Dispersionsherstellung mitverwendete Menge an N-Methyl-pyrrolidon, knapp unterhalb der Raumtemperatur (Meßwert : + 10 °C). Die Filme sind bereits nach Raumtemperaturtrocknung lackartig-hart. Ihre optimalen mechanischen und chemischen Eigenschaften erhalten sie durch 30-minütiges Einbrennen bei ca. 140 °C.

Die Dispersion wird 70 %ig (bezogen auf Bindemittel) mit Titandioxid pigmentiert und der so erhaltene Lack auf unbehandelte, d. h. nicht phosphatierte, lediglich mit Toluol gereinigte Stahlbleche gespritzt. Die Eigenschaften der nach Einbrennen erhaltenen Lakke sind der folgenden Tabelle zu entnehmen.

| | |
|---|---|
| Einbrennbedingungen | 30 min/140 °C |
| Schichtdicke | 30-35 µm |
| Bleistifhärte | 3 H |
| Pendelhärte | 145 sec |
| Erichsentiefung | 9,9 mm |
| Dornbiegeversuch (konischer Dorn nach ASTM-D-522-60) | > 32 % |
| Gitterschnittprüfung (nach DIN 53 151) | Gt O |

Wasserfestigkeit :

| | |
|---|---|
| Lagerung bei RT | >21 Tage, Lack unverändert |
| Lagerung bei 40 °C | >21 Tage, Lack unverändert |

Korrosionsschutztest :

Die Bedingungen des Salzsprühtests nach DIN 53 176 wurden über den geforderten Zeitraum von 100 Stunden hinaus voll erfüllt.

Dieses Ergebnis zeigt, daß sich nach dem erfindungsgemäßen Verfahren wäßrige Lacke herstellen lassen, die auch auf nicht phosphatierten Stahl-Untergründen einen guten Korrosionsschutz bieten.

## Beispiel 2

Es wird ein Prepolymer gemäß Beispiel 1 hergestellt. Nach Abkühlen auf 60 °C gibt man nacheinander 146 g des blockierten Polyisocyanates II und 61,6 g Acetonazin zu und dispergiert dann wie in Beispiel 1 beschrieben. Die erhaltene Dispersion ist feinteilig und zeigt im durchscheinenden Licht einen starken Tyndall-Effekt. Sie hat einen Festkörpergehalt von 40 % und eine Fordbecherviskosität (4 mm-Düse) von 14 Sekunden. Die Lagerstabilität der Dispersion bei Raumtemperatur und bei 50 °C ist vergleichbar mit der Dispersion gemäß Beispiel 1.

Die Eigenschaften der aus dieser Dispersion erhältlichen Lacke entsprechen, bis auf ihre etwas geringere Härte, denen der Lacke gemäß Beispiel 1. Die folgende Tabelle zeigt am Beispiel der Härtemessungen (Lacke wie in Beispiel 1 pigmentiert), daß die optimalen Lackeigenschaften bereits nach 30-minütigem Einbrennen bei 140 °C erhalten werden.

[1)] Der bei der üblichen Amin-Säure-Titration gefundene NCO-Wert ist durch das im Prepolymer vorhandene Triethylamin verfälscht.

| Einbrennbedingungen | Pendelhärte | Bleistifthärte |
|---|---|---|
| 30 min/120°C | 119 sec | H |
| 30 min/140°C | 135 sec | 2 H |
| 30 min/160°C | 138 sec | 2 H |

## Beispiel 3

Es wird ein Prepolymer gemäß Beispiel 1 hergestellt. Nach Abkühlen auf 60 °C gibt man nacheinander 87 g des blockierten Polyisocyanates III und 61,6 g Acetonazin zu und dispergiert dann wie in Beispiel 1 beschrieben. Die erhaltene Dispersion ist feinteilig und zeigt im durchscheinenden Licht einen starken Tyndall-Effekt. Sie hat einen Feststoffgehalt von 40 % und eine Fordbecherviskosität (4 mm-Düse) von 18 Sekunden. Die Lagerstabilität der Dispersion bei Raumtemperatur und bei 50 °C ist vergleichbar mit der Dispersion gemäß Beispiel 1.

Die Dispersion trocknet zu klaren, hochglänzenden Filmen, die ihre optimalen mechanischen und chemischen Eigenschaften bereits durch 30-minütiges Einbrennen bei 100 bis 120 °C erreichen.

Die am Klarlack gemessenen Werte sind der folgenden Tabelle zu entnehmen :

| Einbrennbedingungen | Pendelhärte | Bleistifthärte |
|---|---|---|
| 30 min/100°C | 142 sec | H |
| 30 min/120°C | 153 sec | 2H |
| 30 min/140°C | 155 sec | 2H |

Die Lösungsmittelfestigkeit des Lackes, gemessen durch 5-minütige Benetzung mit Toluol, Ethylglykolacetat und Aceton ist ab 30 min/100 °C befriedigend und ab 30 min/120 °C gut.

## Beispiel 4

Es wird ein Prepolymer gemäß Beispiel 1 hergestellt. Nach Abkühlen auf 60 °C gibt man nacheinander 185 g des blockierten Polyisocyanates IV und 61,6 g Acetonazin zu und dispergiert dann wie in Beispiel 1 beschrieben. Die erhaltene Dispersion ist feinteilig und zeigt im durchscheinenden Licht einen starken Tyndall-Effekt. Sie hat einen Feststoffgehalt von ca. 40 % und eine Fordbecherviskosität (4 mm-Düse) von 14 Sekunden. Das Einbrennverhalten des Klarlackes ist aus der folgenden Tabelle ersichtlich :

| Einbrennbedingung | Pendelhärte | Bleistifthärte |
|---|---|---|
| 30 min/100°C | 112 sec | HB |
| 30 min/120°C | 144 sec | 2H |
| 30 min/140°C | 156 sec | 2H |

Die Lösungsmittelfestigkeit des Lackes, gemessen durch 5-minütige Benetzung mit Toluol, Ethylglykolacetat und Aceton ist ab 30 min/120 °C befriedigend und ab 30 min/140 °C gut.

## Beispiel 5

Es wird ein Prepolymer gemäß Beispiel 1 hergestellt. Nach Abkühlen auf 60 °C läßt man 39,6 g Acetonhydrazon innerhalb von 15 Minuten zutropfen, wobei Temperatur und Viskosität geringfügig ansteigen, ohne daß jedoch die Gefahr einer Gelierung besteht. Dann gibt man 146 g des blockierten Polyisocyanates I zu und dispergiert wie in Beispiel 1 beschrieben. Die so erhaltene Dispersion entspricht in Feinteiligkeit und Sedimentationsstabilität der Dispersion gemäß Beispiel 1. Bei einem Festkörpergehalt von 40 % beträgt die Fordbecherviskosität (4 mm Düse) 20 Sekunden.

Die Dispersion trocknet zu Filmen auf, die nach 30-minütigem Einbrennen bei 140 °C ähnliche Eigenschaften zeigen wie die Lacke gemäß Beispiel 1.

Beispiel 6

Es wird ein Prepolymer gemäß Beispiel 1 hergestellt. Nach Abkühlen auf 60 °C gibt man nacheinander 50 g eines Ketimins aus Isophorondiamin und Methyl-isobutylketon (Aminogruppen zu 98 % blockiert), 44,8 g Acetonazin und 146 g des blockierten Polyisocyanates I zu und dispergiert dann wie in Beispiel 1 beschrieben. Die erhaltene Dispersion ist feinteilig und zeigt im durchscheinenden Licht einen starken Tyndall-Effekt. Sie hat einen Festkörpergehalt von ca. 40 % und eine Fordbecherviskosität (4 mm Düse) von 24 Sekunden.

Die aus dieser Dispersion durch Trocknen und 30-minütiges Einbrennen bei 140 °C erhaltenen Lacke entsprechen denen gemäß Beispiel 1.

Beispiel 7

Ansatz :

315 g Adipinsäure-Hexandiol-Polyester (Molgew. : 840)
20,1 g Trimethylolpropan
53,6 g Dimethylolpropionsäure
30,3 g Triethylamin
288,2 g 4,4'-Diisocyanatodicyclohexylmethan
184,8 g Hexamethylendiisocyanat
87 g blockiertes Polyisocyanat III
94,1 g Acetonazin
1 365 g entionisiertes Wasser

Aus dem bei 100 °C im Vakuum entwässerten Polyester, dem Trimethylolpropan, der Dimethylolpropionsäure und dem Triethylamin stellt man bei 90 °C ein homogenes, klares Gemisch her. Dann kühlt man ab, gibt nacheinander die beiden Diisocyanate zu und rührt bei 60 °C, bis ein (korrigierter) NCO-Wert von 11,3 % erreicht ist. Zu dem so erhaltenen NCO-Präpolymer gibt man nacheinander das blockierte Polyisocyanat und das Acetonazin und läßt dann unter gutem Rühren das auf 60 °C angewärmte Wasser zulaufen. Anschließend wird 3 Stunden bei 60 °C nachgerührt und auf Raumtemperatur abgekühlt. Die so erhaltene Dispersion ist feinteilig und zeigt im durchscheinenden Licht einen starken Tyndall-Effekt. In ihrer Sedimentationsstabilität entspricht die Dispersion der Dispersion gemäß Beispiel 1. Die Fordbecherviskosität (4 mm Düse) beträgt 26 Sekunden bei einem Feststoffgehalt von 40 %.

Das Beispiel zeigt, daß das erfindungsgemäße Verfahren gänzlich ohne Mitverwendung organischer Lösungsmittel durchführbar ist und daß sich so sedimentationsstabile Dispersionen herstellen lassen.

Die oben beschriebene Dispersion trocknet beim Raumtemperatur zu einem Film mit deutlicher Rißstruktur. Durch Zugabe von 10 Gew.-% Ethylglykol oder N-Methylpyrrolidon als Filmbildungshilfsmittel zu der Dispersion wird die Mindestfilmbildungstemperatur unter 0 °C gesenkt und man erhält einen glatten, homogenen Film. Nach 30-minütigem Einbrennen bei 120 °C weist der Lack eine Pendelhärte von 125 Sekunden und die Bleistifthärte H auf.

Beispiel 8

Ansatz :

170 g Adipinsäure-Hexandiol-Neopentylglykol-Polyester (Molekulargewicht : 1 700)
231 g Adipinsäure-Hexandiol-Polyester (Molekulargewicht : 840)
20,1 g Trimethylolpropan
107,2 g Dimethylolpropionsäure
55,6 g Triethylamin
350 g N-Methylpyrrolidon
471,6 g 4,4'-Diisocyanatodicyclohexylmethan
1 022 g blockiertes Polyisocyanat I
44,8 g Acetonazin
1 980 g entionisiertes Wasser

Aus den Polyestern, dem Trimethylolpropan, der Dimethylolpropionsäure, dem Triethylamin, dem N-Methylpyrrolidon und dem Diisocyanatodicyclohexylmethan stellt man, wie in Beispiel 1 beschrieben, ein NCO-Präpolymer her (korrigierter NCO-Wert : 2,4 %). Man kühlt auf 70 °C ab und gibt das blockierte Polyisocyanat und das Acetonazin zu. Unter gutem Rühren läßt man jetzt das Wasser zulaufen, worauf sich eine feinteilige Dispersion bildet. Diese wird 3 Stunden bei 60 °C nachgerührt und dann auf Raumtemperatur abgekühlt.

Die so erhaltene Dispersion hat bei einem Feststoffgehalt von 40 % eine Fordbecherviskosität (4 mm Düse) von 14 Sekunden. Sie zeigt im durchscheinenden Licht einen starken Tyndall-Effekt und besitzt

eine ähnlich gute Sedimentationsstabilität wie die Dispersion gemäß Beispiel 1.

Dieses Beispiel zeigt, daß sich nach dem erfindungsgemäßen Verfahren stabile Dispersionen herstellen lassen, deren Gehalt an hydrophoben Vernetzern in der Größenordnung des Gehaltes an hydrophilem Polyurethanharnstoff liegt, oder, wie im nachfolgenden Beispiel 9 beschrieben, den Gehalt an Polyurethanharnstoff sogar bei weitem übersteigt.

Beispiel 9

Ansatz :

| | | |
|---|---|---|
| 170 | g | Adipinsäure-Hexandiol-Neopentylglykol-Polyester (Molekulargewicht : 1 700) |
| 231 | g | Adipinsäure-Hexandiol-Polyester (Molekulargewicht : 840) |
| 20,1 | g | Trimethylolpropan |
| 107,2 | g | Dimethylolpropionsäure |
| 80,8 | g | Triethylamin |
| 350 | g | N-Methylpyrrolidon |
| 471,6 | g | 4,4'-Diisocyanatodicyclohexylmethan |
| 3 102 | g | blockiertes Polyisocyanat I |
| 44,8 | g | Acetonazin |
| 3 770 | g | entionisiertes Wasser |

Es wird wie in Beispiel 8 ein NCO-Präpolymer hergestellt (korrigierter NCO-Wert : 2,3 %). Man kühlt auf 70 °C ab und gibt das blockierte Polyisocyanat und das Acetonazin zu. Unter gutem Rühren läßt man dann das Wasser zulaufen. Die entstandene Dispersion wird 3 Stunden bei 60 °C nachgerührt und dann auf Raumtemperatur abgekühlt.

Die Dispersion besitzt eine deutlich geringere Feinteiligkeit als die Dispersion gemäß Beispiel 8, zeigt jedoch im durchscheinenden Licht einen wahrnehmbaren Tyndall-Effekt und ist bei Raumtemperatur länger als 3 Monate gegen Sedimentation stabil. Die Fordbecher-Viskosität (4 mm Düse) beträft 13 Sekunden, bei einem Feststoffgehalt von 40 %.

Beispiel 10

Ansatz :

| | | |
|---|---|---|
| 483 | g | Adipinsäure-Hexandiol-Polyester (Molgewicht : 840) |
| 20,1 | g | Trimethylolpropan |
| 85 | g | propoxyliertes Addukt aus 2-Butendiol-1,4 und $NaHSO_3$ (Molekulargewicht : 425) |
| 100 | g | N-Methylpyrrolidon |
| 366,8 | g | 4,4'-Diisocyanatodicyclohexylmethan |
| 67,2 | g | Hexamethylendiisocyanat |
| 210 | g | blockiertes Polyisocyanat IV |
| 62,7 | g | Acetonazin |
| 1 600 | g | entionisiertes Wasser |

Zu dem entwässerten Polyester, dem Trimethylolpropan, dem Bisulfitaddukt und dem N-Methylpyrrolidon gibt man die beiden Diisocyanate und rührt bei 100 bis 110 °C, bis ein NCO-Wert von 6,0 % erreicht ist. Das so erhaltene NCO-Prepolymer wird auf 75 °C abgekühlt. Nacheinander wird das blockierte Polyisocyanat und das Acetonazin zugegeben. Anschließend läßt man unter gutem Rühren das Wasser zulaufen, rührt 3 Stunden bei 60 °C nach und kühlt dann auf Raumtemperatur ab. Die so erhaltene Dispersion zeigt im durchscheinenden Licht einen starken Tyndall-Effekt. Sie hat einen Feststoffgehalt von 40 % und eine Fordbecherviskosität (4 mm Düse) von 28 Sekunden. Der Feststoff enthält 16,7 Milliäquivalent-% an Sulfonatgruppen.

Die Dispersion ist zur Beschichtung von flexiblen Substraten, z. B. von PVC-beschichteten Textilien geeignet. Nach thermischer Vernetzung weisen die Beschichtungen eine gute Lösungsmittelfestigkeit, insbesondere eine gute Chemischreinigungsbeständigkeit, auf. Einen Anhaltspunkt dafür geben die Quellungswerte der aus der Dispersion erhaltenen Filme (2-stündige Lagerung in Trichlorethylen bei Raumtemperatur) :

| Film | Volumenquellung in Trichlorethylen |
|---|---|
| Trocknung bei 80 °C | 600 % |
| Trocknung bei 80 °C + 5 min/160 °C | 175 % |

Beispiel 11

Ansatz :

1 224 g Adipinsäure-Hexandiol-Neopentylglykol-Polyester (Molekulargewicht : 1 700)
85,5 g Polyether aus 85 % Ethylenoxid und 15 % Propylenoxid, gestartet auf n-Butanol (Molekulargewicht : 2 150)
110,5 g propoxyliertes Addukt aus 2-Butendiol-1,4 und $NaHSO_3$ (Molekulargewicht : 425)
222 g Isophorondiisocyanat
168 g Hexamethylendiisocyanat
219 g blockiertes Polyisocyanat I
167 g Ketimin aus Isophorondiamin und Methylisobutylketon (Aminogruppen zu 98 % blockiert)
2 960 g entionisiertes Wasser
7,5 g Hydrazinhydrat

Zu dem entwässerten Gemisch aus dem Polyester, dem Polyether und dem Bisulfitaddukt gibt man das Isophorondiisocyanat und das Hexamethylendiisocyanat und rührt bei 110 °C, bis ein NCO-Wert von 4,6 % erreicht ist. Man kühlt auf 70 °C ab und gibt zu dem erhaltenen NCO-Präpolymer nacheinander das blockierte Polyisocyanat und das Ketimin zu. Unter gutem Rühren läßt man dann das Wasser, dem das Hydrazinhydrat zugesetzt ist, zulaufen, rührt 3 Stunden bei 60 °C nach und kühlt dann auf Raumtemperatur ab.

Die so erhaltene Dispersion zeigt im durchscheinenden Licht einen starken Tyndall-Effekt. Sie hat einen Feststoffgehalt von 40 % und eine Fordbecherviskosität (4 mm Düse) von 15 Sekunden. Der Feststoff enthält 12,6 Milliäquivalent-% an Sulfonatgruppen und 3,3 Gew.-% Polyethylenoxid-Segmente.

Die Dispersion ist als Haftstrich zur Textilbeschichtung geeignet. Die damit hergestellten Beschichtungen zeichnen sich durch eine sehr gute Chemischreinigungsbeständigkeit aus.

Beispiel 12

Es wird ein Prepolymer gemäß Beispiel 11 hergestellt. Nach Abkühlen auf 70 °C gibt man nacheinander 292 g des blockierten Polyisocyanates I und 243 g eines Bisoxazolidins der Formel

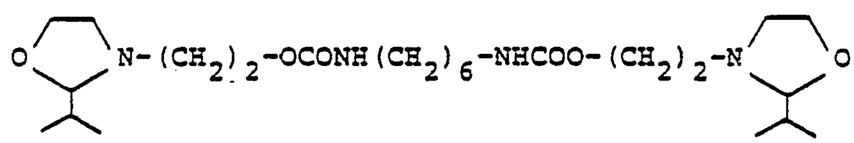

zu und dispergiert mit 3 060 g Wasser, wie in Beispiel 11 beschrieben. Die erhaltene Dispersion ist feinteilig und zeigt im durchscheinenden Licht einen starken Tyndall-Effekt. Sie hat eine Fordbecherviskosität (4 mm Düse) von 18 Sekunden bei einem Festkörpergehalt von 40 %.

Textilbeschichtungen, die mit dieser Dispersion als Haftstrich hergestellt werden, besitzen eine sehr gute Chemischreinigungsbeständigkeit.

**Patentansprüche**

1. Verfahren zur Herstellung von hitzeaktivierbare Vernetzer enthaltenden, lagerstabilen wäßrigen Dispersionen oder Lösungen von vernetzbaren Polyurethan-Polyharnstoffen auf Basis von

a) eine, die Dispergierbarkeit bzw. Löslichkeit der Systeme in Wasser gewährleistende, Menge an chemisch eingebauten hydrophilen Gruppierungen und/oder externen, nicht chemisch gebundene Emulgatoren enthaltenden (im statistischen Mittel) mindestens 1,8 freie, endständige Isocyanatgruppen aufweisenden Präpolymeren,

b) in Wasser weder löslichen noch dispergierbaren, hydrophoben Polyisocyanaten mit blockierten Isocyanatgruppen und

c) Verbindungen, welche höchstens eine freie aminische oder hydrazinische primäre oder sekundäre Aminogruppe und mindestens eine blokkierte, unter dem Einfluß von Wasser eine freie, aminische oder hydrazinische primäre oder sekundäre Aminogruppe bildende Gruppe und insgesamt mindestens 2 zumindest teilweise blockierte aminische oder hydrazinische primäre und/oder sekundäre Aminogruppen aufweisen,

unter Herstellung von Gemischen aus a) und c) unter Einhaltung eines solchen Mengenverhältnisses der Komponenten, daß auf jede freie Isocyanatgruppen der Komponente a) 0,25 bis 2 blockierte bzw. nichtblockierte primäre oder sekundäre, hydrazinische oder aminische Aminogruppen vorliegen in einem Temperaturbereich von — 20 bis + 100 °C und anschließendes Vermischen des Gemischs mit Wasser, dadurch gekennzeichnet, daß man bei der Herstellung der Gemische aus a) und c) die Komponente b) in einer solchen Menge mitverwendet, daß in dem mit Wasser zu vermischenden Gemisch pro Gewichsteil der Komponente a) 0,02 bis 3 Gew.-Teile der Komponente b) in Form eines physikalischen Gemischs vorliegen.

2. Verfahren gemäß Anspruch 1, dadurch gekennzeichnet, daß man als Komponente a) NCO-Präpolymere verwendet, die frei von externen Emulgatoren sind.

3. Verfahren gemäß Anspruch 1 und 2, dadurch gekennzeichnet, daß man als Komponente a) NCO-Präpolymere verwendet, die eingebaute Carboxylat- und gegebenenfalls Carboxylgruppen enthalten.

4. Verfahren gemäß Anspruch 1 bis 3, dadurch gekennzeichnet, daß man als Komponente b) blockierte Polyisocyanate einer mittleren NCO-Funktionalität, bezogen auf thermisch reaktivierbare Isocyanatgruppen, von größer als 2 verwendet.

5. Verfahren gemäß Anspruch 1 bis 4, dadurch gekennzeichnet, daß man als Komponente b) Polyisocyanate mit Oxim-blockierten Isocyanatgruppen verwendet.

6. Verfahren gemäß Anspruch 1 bis 5, dadurch gekennzeichnet, daß man als Komponente c) Azin-, Hydrazon-, Ketimin-, Aldimin- und/oder Enamingruppierungen aufweisende Verbindungen oder beliebige Gemische derartiger Verbindungen verwendet.

7. Gemäß Anspruch 1 bis 6 erhaltene wäßrige Dispersionen oder Lösungen.

8. Verwendung der gemäß Anspruch 1 bis 6 erhaltenen wäßrigen Dispersionen oder Lösungen zur Herstellung von Überzügen durch Beschichtung hitzeresistenter Substrate, Entfernen des Wassers durch Verdunsten oder Verdampfen unter gleichzeitiger oder anschließender thermischer Vernetzung der Beschichtungen.

**Claims**

1. Process for the preparation of storage-stable aqueous dispersions or solutions of cross-linkable polyurethane polyureas which contain cross-linking agents capable of being activated by heat and are based on

a) prepolymers which contain (on statistical average) at least 1.8 free, terminal isocyanate groups and a quantity of chemically incorporated hydrophilic groupings and/or external, non-chemically-bound emulsifiers which ensures the dispersibility or solubility of the systems in water,

b) hydrophobic polyisocyanates which have blocked isocyanate groups and are neither soluble nor dispersible in water and

c) compounds which have at most one free aminic or hydrazinic primary or secondary amino group and at least one blocked group which forms a free, aminic or hydrazinic primary or secondary amino group under the influence of water, and a total of at least 2 at least partially blocked aminic or hydrazinic primary and/or secondary amino groups,

by preparing mixtures of a) and c) while adhering to such a quantitative ratio of the components that 0.25 to 2 blocked or non-blocked primary or secondary, hydrazinic or aminic amino groups are present per free isocyanate groups of component a), in a temperature range of — 20 to + 100 °C, and subsequently mixing the mixture with water, characterised in that during the preparation of the mixtures of a) and c) component b) is also used in such an amount that, per part by weight of component a), 0.02 to 3 parts by weight of component b) are present in the form of a physical mixture in the mixture to be mixed with water.

2. Process according to Claim 1, characterised in that NCO prepolymers which are free from external emulsifiers are used as component a).

3. Process according to Claim 1 and 2, characterised in that NCO prepolymers which contain incorporated carboxylate and possibly carboxyl groups are used as component a).

4. Process according to Claim 1 to 3, characterised in that blocked polyisocyanates having an average NCO functionality, based on the isocyanate groups which can be thermally reactivated, of greater than 2, are used as component b).

5. Process according to Claim 1 to 4, characterised in that polyisocyanates having oxime-blocked isocyanate groups are used as component b).

6. Process according to Claim 1 to 5, characterised in that compounds containing azine, hydrazine, ketimine, aldimine and/or enamine groupings or any desired mixtures of such compounds are used as component c).

7. Aqueous dispersions or solutions obtained according to Claim 1 to 6.

8. Use of the aqueous dispersions or solutions obtained according to Claim 1 to 6 for the production of coatings by coating heat-resistant substrates and removing the water by vaporisation or evaporation with simultaneous or subsequent thermal cross-linking of the coatings.

**Revendications**

1. Procédé pour la préparation de dispersions ou de solutions aqueuses stables au stockage et contenant des agents réticulants pouvant être activés par la chaleur, de polyuréthanes-polycarbamides réticulables, à base de

a) une quantité assurant la dispersabilité ou la solubilité du système dans l'eau, de prépolymères pourvus d'au moins 1,8 groupe isocyanate terminal libre (en moyenne statistique) et comportant des émulsifiants externes sans liaison chimique et/ou des groupes hydrophiles chimiquement incorporés.

b) des polyisocyanates hydrophobes ni solubles ni émulsifiables dans l'eau, avec des groupes isocyanate bloqués, et

c) des composés qui présentent au plus un groupe amino primaire ou secondaire aminique ou hydrazinique libre et au moins un groupe bloqué formant, sous l'effet de l'eau, un groupe amino primaire ou secondaire aminique ou hydrazinique libre et, au total, au moins deux groupes amino primaires et/ou secondaires aminiques ou hydraziniques au moins partiellement bloqués,

procédé selon lequel on prépare des mélanges de a) et de c) en maintenant un rapport quantitatif des composants tel qu'à chaque groupe isocyanate libre du composant a) corresponde 0,25 à 2 groupes amino bloqués ou non bloqués, primaires ou secondaires, hydraziniques ou aminiques, dans la gamme des températures de — 20 à + 100 °C, puis on mélange ce mélange avec de l'eau, caractérisé en ce que l'on utilise pour la préparation des mélanges de a) et de c) les composants b) en quantité telle que le mélange à ajouter à l'eau contient, pour chaque partie en poids du composant a), 0,02 à 3 parties en poids du composant b) sous forme d'un mélange physique.

2. Procédé selon la revendication 1, caractérisé en ce que l'on utilise, comme composants a), des prépolymères NCO qui sont exempts d'émulsifiants externes.

3. Procédé selon les revendications 1 et 2, caractérisé en ce que l'on utilise, comme composants a), des prépolymères NCO qui contiennent des groupes carboxylate incorporés et, éventuellement, des groupes carboxyle.

4. Procédé selon les revendications 1 à 3, caractérisé en ce que l'on utilise, comme composants b), des polyisocyanates bloqués ayant une fonctionnalité NCO moyenne, rapportée aux groupes isocyanate pouvant être mis en réaction thermiquement, supérieure à 2.

5. Procédé selon les revendications 1 à 4, caractérisé en ce que l'on utilise, comme composants b), des polyisocyanates avec des groupes isocyanate bloqués par oximes.

6. Procédé selon les revendications 1 à 5, caractérisé en ce que l'on utilise, comme composants c), des composés présentant des groupements azine, hydrazone, cétimine, aldimine et/ou énamine, ou des mélanges quelconques de ces composés.

7. Dispersions ou solutions aqueuses obtenues selon les revendications 1 à 6.

8. Utilisation des dispersions ou solutions aqueuses préparées suivant les revendications 1 à 6 pour la réalisation de revêtements par enduction de substrats résistant à la chaleur, élimination de l'eau par vaporisation ou évaporation et réticulation thermique simultanée ou ultérieure des revêtements.